# EUROPEAN PATENT SPECIFICATION

(11) **EP 1 522 178 B1**
(45) Date of publication and mention of the grant of the patent: **12.03.2008**
(21) Application number: 03702362.9
(22) Date of filing: 20.01.2003
(51) Int. Cl.: H04L 29/06

(54) **METHOD AND ADAPTER FOR PROTOCOL DETECTION IN A FIELD BUS NETWORK**
METHODE UND ADAPTER ZUR PROTOKOLL-ERMITTLUNG IN EINEM FELDBUSNETZWERK
PROCEDE ET ADAPTATEUR DE DETECTION DE PROTOCOLE DANS UN RESEAU A BUS DE TERRAIN

(30) Priority: 25.06.2002 DK 200200978
(43) Date of publication of application: 13.04.2005
(73) Proprietor: PR Electronics A/S, 8410 Rønde (DK)
(72) Inventor: LINDEMANN, Stig, DK-8210 Århus N (DK)
(74) Representative: Nielsen, Leif
(86) International application number: PCT/DK2003/000034
(87) International publication number: WO 2003/039098

(56) References cited:
- EP-A- 0 713 310
- US-A- 5 617 418
- US-A- 5 923 557
- US-A- 6 122 287
- US-A- 6 151 640

## Description

### FIELD OF THE INVENTION

The invention relates to a field bus adapter for transmitting and receiving control data from a field bus network where data is being exchanged according to a specific field bus protocol. The adapter comprises a transmitter for transmitting data to the field bus network and a receiver for receiving data from the field bus network. The invention further relates to a method for transmitting and receiving control data from a field bus network where data is being exchanged according to a specific field bus protocol. The method comprises the step of transmitting data to the field bus network and the step of receiving data from the field bus network. The invention also relates to a storage medium having stored thereon instructions for performing the method of transmitting and receiving control data from a field bus network where data is being exchanged according to a specific field bus protocol. The method comprises the step of transmitting data to the field bus network and the step of receiving data from the field bus network.

### BACKGROUND OF THE INVENTION

Communication networks coupling input and output devices have been increasingly applied to many different control systems. These input devices and output devices allow the controllers to receive and process local I/O functions, such as a measured physical value e.g. a temperature. The devices communicate using bus communication, also called field bus network communication.

In control systems it is essential that the communication is performed reliably and within short time intervals. This is e.g. important since fast and reliable data is often a must in order to obtain a satisfactory control. Therefore, very strict requirements are set to answering times in field bus network communication, typically being much stricter than the requirements of communication in standard IT systems.

In a field bus communication network a variety of different field bus communication protocols can be used, where the most common used field bus types are Profibus PA (PB) and Foundation Fieldbus (FF). One protocol is usually dedicated to a given control system or to a network of control systems having the same type of control.

A field bus adapter is dedicated to a specific network protocol so that the unit cannot be used on networks where a different communication protocol is used. Thereby different network interface units for each different communication protocol are required.

US 6151640 describes a field bus network of input and output devices being coupled to a control system through an I/O interface module, regardless of their data structures. The I/O interface module is coupled to the control system through a serial communication port. Local input and output devices are coupled to the interface I/O module through a local I/O interface, and networked input and output devices are coupled to the interface I/O module through a field bus communication adapter. In this example, a different adapter is required for each type of field bus protocol, not solving the problem of requiring specific units for specific network protocols.

EP 0906595 describes a circuit for communication between external field devices and a field bus. The circuit is adapted for detecting the protocol and the supply voltages of the external field devices connected to the circuit and communicating across the field bus via the circuit. In EP 0906595 it has not been described how this protocol detection could be performed.

In order to comply with the strict requirements to answering times in field bus network communication, it is very important that the detection process can be performed very fast. Further, the detection process should have very low requirements to the needed resources, whereby both the size of memory in the circuit and the requirements to the CPU can be less harsh.

### OBJECT OF THE INVENTION

It is an object of the present invention to provide a fast automatic selection between field bus protocols and to perform communication over the selected field bus. This is obtained by a field bus adapter for transmitting and receiving control data from a field bus network where data is being exchanged according to a specific field bus protocol, said adapter comprises a transmitter for transmitting data to the field bus network and a receiver for receiving data from the field bus network, characterized in that the adapter further comprises a protocol detector adapted for detecting a field bus protocol between a number of predefined field bus protocols and setting up the receiver and the transmitter for communicating according to said detected field bus protocol, said protocol detector comprising
- means for receiving data from the field bus,
- means for determining if the received data complies with predefined characteristics stored in a database, said characteristics uniquely identifying data of only one of said number of predefined field bus protocols,
- means for setting up the receiver and transmitter for communicating according to said one protocol, if said received data complies with said characteristics.

By having characteristics that uniquely identify a protocol from a number of predefined protocols, the protocol can easily be identified. Since the characteristics only have to identify uniquely a protocol from a limited number of predefined protocols, these characteristics are easier to obtain and thereby determining if the received data complies with the characteristics becomes simple, and as a result the detection process requires few resources.

A further advantage is that the same field bus adapter is compatible with a number of different communication protocols. Adapters communicating in a field bus network, using a first protocol, can then be used for communicating in another field bus network using a different protocol, or the protocol used in a field bus network can be changed without having to change the adapters. This makes the adapter more interesting for the potential buyers. Further, for the producer of the adapters it is an advantage that only one production line is necessary instead of a number of production lines producing adapters being specific for each field bus protocol. The adapter of the present invention also makes it easy for the user since it is not necessary to know exactly which field bus protocol is being used; instead the adapter can be connected and then the field bus protocol is automatically detected and used.

In a specific embodiment the protocol detector is adapted for detecting two predefined field bus protocols being a first and a second predefined field bus protocol, the protocol detector comprising
- means for receiving data from the field bus,
- means for determining if the received data complies with predefined characteristics stored in a database, said characteristics uniquely identifying data of said first field bus protocol,
- means for setting up the receiver and transmitter for communicating according to said first predefined protocol, if the received data complies with said characteristics.
- means for setting up the receiver and transmitter for communicating according to said second predefined protocol, if said received data does not comply with said characteristics.

When the detector only has to determine which of two predefined protocols is being used on a field bus network, the detection process becomes very simple since a detection only has to be performed based on one protocol. If it is not the one protocol, then it is the other protocol. This method is very simple and requires few resources.

In an embodiment the data are received in data frames comprising a number of fields and wherein said characteristics uniquely identify data frames of one of said number of predefined field bus protocols. A protocol is normally characterized by its data frame structure; therefore by looking at this structure, the protocol type can be determined in a simple and fast way.

In a specific embodiment the characteristics uniquely identifying a data frame comprise characteristics of the content of specific fields in the data frame. By looking at specific fields, characteristics related to the protocol can be identified in a simple manner.

In a specific embodiment the characteristics uniquely identifying a data frame comprise the length of a data frame. The characteristics related to a specific protocol could also be identified by length. This could e.g. be a supplement to the content detection.

In an embodiment the predefined protocol is detected based on more than one data frame. This is to improve the detection process and thereby reduce the chance of error detection. Further knowledge about concurrent data frames related to the protocol could also make it necessary to check data frames in order to uniquely identify a protocol.

In another embodiment the first field bus protocol is Profibus PA and the second field bus protocol is Foundation Fieldbus. These two protocols are very commonly used in field bus networks.

In a specific embodiment the characteristics uniquely identifying a Profibus PA comprise characteristics of the content of the first field in the data frame and of the length of the data frame. This has proven to be a very efficient way of uniquely identifying a Profibus PA data frame from a Foundation Fieldbus data frame.

In an embodiment the control data to be transmitted is a value representing a measured physical value. The physical value could be both temperature, speed, and/or distance and the physical value is then used for controlling a process performed by a control unit connected to the field bus network.

In a specific embodiment the adapter comprises means for measuring said physical value. Thereby the adapter comprises the measuring means or the transducer and the adapter is dedicated for a specific purpose which makes the adapter both easy to install and which makes it easier to optimize the adapter for the specific purpose.

The object of the present invention is also obtained by a method comprising the step of detecting the field bus protocol and setting up the receiver and transmitter for communicating according to the detected field bus protocol.

In a specific embodiment the step of detecting the field bus protocol and setting up the receiver and the transmitter for communicating, according to the detected field bus protocol, is only performed in an initialisation phase before transmitting and receiving control data via said field bus network. Thereby, the detection data can be processed faster since no detection process has to be performed.

In another embodiment the step of detecting the field bus protocol is performed periodically in predefined intervals. Thereby the used protocol can be changed in a field bus network and the method will adapt the transmitting and receiving format to the new protocol.

### BRIEF DESCRIPTION OF THE DRAWINGS

In the following, preferred embodiments of the invention will be described referring to the figures, where
figure 1 shows a number of field bus adapters connected to a field bus network,
figure 2 is a flow diagram illustrating the step of communicating via a field bus system using different field bus protocols and a protocol detector,
figure 3 is a flow diagram illustrating the step of detecting a protocol,
figure 4 is a flow diagram illustrating the step of detecting the field bus protocols Foundation Fieldbus and Profibus PA,
figure 5 is a table of the data link layer message structure in Foundation Fieldbus,
figure 6-8 illustrate a comparison of specific data frames in respectively Profibus PA and Foundation Fieldbus,
figure 9 shows the different elements in an embodiment of a field bus adapter.

### DESCRIPTION OF PREFERRED EMBODIMENTS

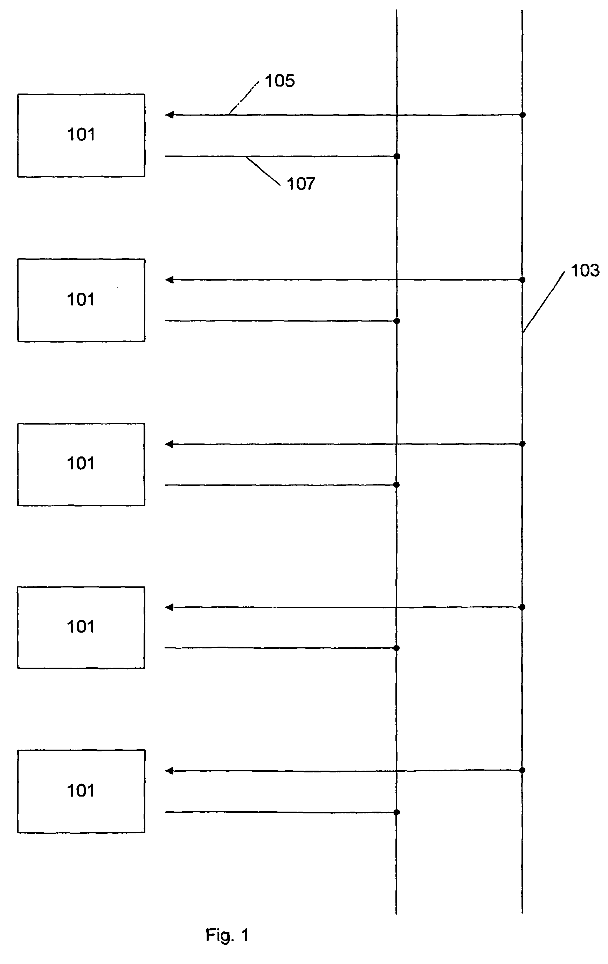

Figure 1 shows an example of a control system. The control system comprises a number of field bus adapters 101 communicating across a field bus network 103. The field bus adapters could be connected to a number of different types of transducers for measuring physical values such as temperature, speed, and/or distance. These measured values are transmitted via a transmit channel 107 to e.g. a control computer via the field bus network, where the control computer e.g. could use the received values for controlling a process. The adapters 101 might also receive information (via a channel 105) such as a control signal indicating that the physical value should be measured and transmitted.

When communicating across a field bus network, different communication protocols can be used and examples of field bus communication protocols are Profibus PA and Foundation Fieldbus. Normally, a protocol is chosen when setting up the control system and then all devices communicating via the field bus network use the selected protocol. Alternatively, the protocol detection could be used in a field bus network where different protocols are used on the same network. In this case the protocol detector detects the protocol each time data is received and processes the data according to the detected protocol.

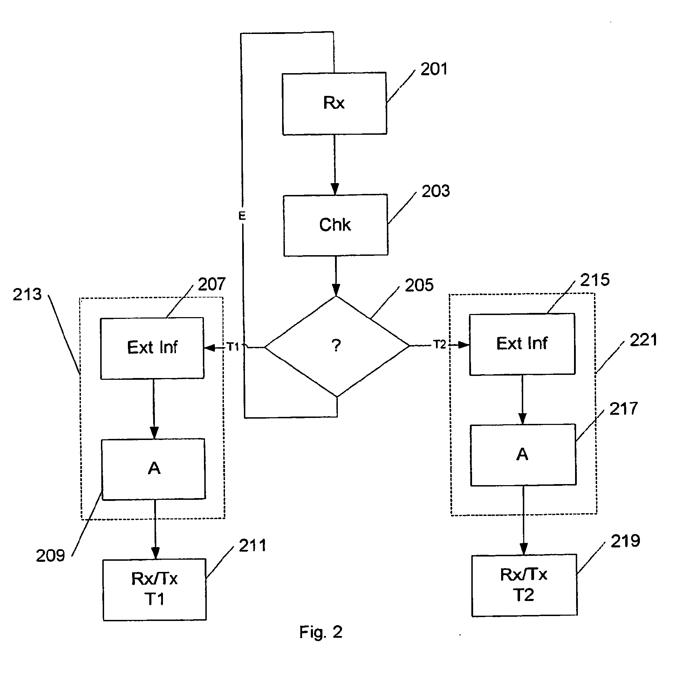

Figure 2 is a flow diagram illustrating the step of automatically detecting a protocol. The field bus adapter is connected to a field bus network and in 201 the adapter receives a data package via the field bus network. The data package could either be a package, which is intended for the specific field bus adapter, or it could be any package being transmitted via the field bus network. In 203, the adapter checks the package and detects the protocol.

The protocol could e.g. be determined by checking the data frame of the received data package, which uniquely identifies the protocol; e.g. when communicating according to the protocol Profibus PA one frame is different from the frame used when communicating according to the Foundation Fieldbus protocol. Information about each protocol could be stored in the field bus adapter and this information can then be compared to the information obtained by checking the frame of the received data package, whereby the protocol can be identified.

In 205, the result of the check in 203 is used to determine the next step in the algorithm, and if the protocol has been detected as a protocol referred to as T1, then in 207 the instructions are extracted from the package according to rules defined by the protocol T1. In 209, actions are performed according to the extracted instructions and in 211 all future communication via the field bus network will be performed according to the detected protocol T1. The future communication could be performed by receiving a data packet via the field bus network, extracting information according to T1 and performing an action according to the extracted information. The future communication could also be encoding instructions to be transmitted using the protocol T1 and then transmitting the encoded instructions. If the protocol has been detected as a protocol referred to as T2, then in 215 the instructions are extracted from the package according to rules defined by the protocol T2. In 217, actions are performed according to the extracted instructions and in 219, all future communication via the field bus network will be performed according to the detected protocol T2. Also, in this case, the future communication could be performed by receiving a data packet via the field bus network, extracting information according to T2 and performing an action according to the extracted information. The future communication could also be encoding instructions to be transmitted using the protocol T2 and then transmitting the encoded instructions. T2 and T1 could e.g. be respectively Profibus PA and Foundation Fieldbus.

A further possibility is that in 203 it is not possible to detect the protocol, which could be because of an error in the received data package, and thus the detection process is restarted using a new data package for protocol detection.

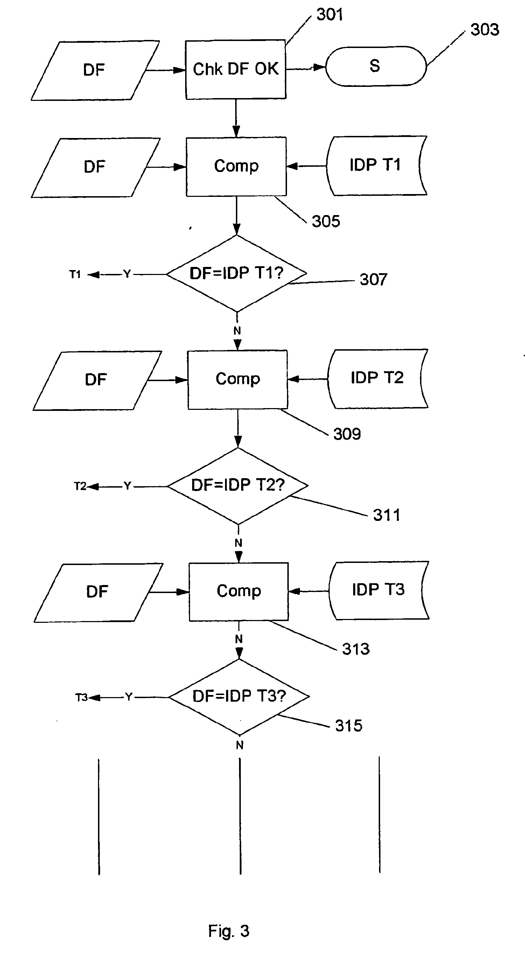

In figure 3, a flow diagram illustrates the step of detecting a protocol according to the present invention. First in 301, a received data frame DF is checked in order to determine if the received data represents a valid data frame; this could e.g. be performed according to a checksum. If it is determined that the received data is not a valid data frame then the detection process is stopped 303. After 303, it has been determined that the received data frame is a valid data frame and the process of detecting the protocol type or format can begin. Characteristics IDP of a data frame being unique for only one protocol named T1 have been pre stored in a database and these characteristics are compared with the received data frame DF in 305.

As illustrated in 307, if the data frame DF has the same characteristics as the characteristics IDPT1 uniquely identifying T1, the received data frame is transmitted according to the T1 protocol, otherwise it is not transmitted according the T1 protocol.

When it has been determined that the received data frame has not been transmitted according to the protocol T1, then in 309 the received data frame DF is compared to characteristics IDPT2 uniquely identifying a data frame being transmitted according to a second protocol T2. Again, as illustrated in 311, if the data frame DF has the same characteristics as the characteristics IDPT2 uniquely identifying T2, then the received data frame is transmitted according to the T2 protocol, otherwise it is not transmitted according the T2 protocol.

When it has been determined that the received data frame has not been transmitted according to the protocol T1 or T2, then in 313 the received data frame DF is compared to characteristics IDPT3 uniquely identifying a data frame being transmitted according to a third protocol T3. Again, if the data frame DF has the same characteristics as the characteristics IDPT3 uniquely identifying T3, then the received data frame is transmitted according to the T3 protocol, otherwise it is not transmitted according the T3 protocol.

The process can then be repeated for a number of protocols as long as characteristics exist which are uniquely identifying a protocol T4 from a remaining number of predefined protocols T5 ->. If there are e.g. 5 protocols (T1, T2, T3, T4, T5) to be detected, then the first protocol T1 to be detected has to be detected based on characteristics IDPT1 uniquely identifying T1 from the protocols (T2, T3, T4, T5); the second protocol T2 to be detected has to be detected based on characteristics IDPT2 uniquely identifying T2 from the protocols (T3, T4, T5); the third protocol T3 to be detected has to be detected based on characteristics IDPT3 uniquely identifying T3 from the protocols (T4, T5); the fourth protocol T4 to be detected has to be detected based on characteristics IDPT4 uniquely identifying T4 from the protocol T5.

Finally, since the validity of the data frame has already been checked in 301, if there exits knowledge that only the five protocols (T1, T2, T3, T4, T5) are being used on the network, then it can automatically be determined that if the protocol cannot be detected as either (T1, T2, T3, T4), then it must be a T5 protocol and thereby the T5 protocol has been detected.

The order in which the detection is performed could be based on whether it is possible to identify uniquely a protocol from other protocols or on the amount of resources needed to uniquely identify a protocol, and if e.g. a protocol has strong characteristics, which can easily be uniquely identified from the group of possible protocols, then it could be of interest to detect this protocol initially. Further, if a protocol has weak characteristics, then the identification could be performed at a late stage in order to ensure that the protocol only has to be uniquely identified from a small group of protocols.

Other criteria to be used for the detection order could be based on knowledge about which protocol is being used most often on the field bus network. It is of interest to detect this protocol initially whereby a lot of detection steps can be saved and the detection is performed in a way minimising the use of time and resources, which can be crucial factors in field bus systems.

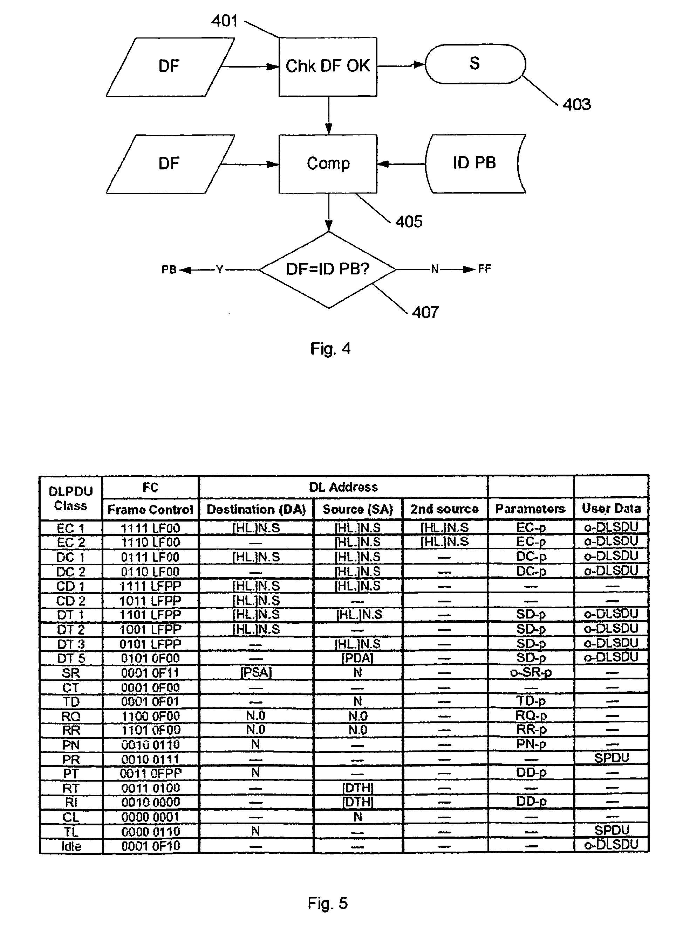

In figure 4, a flow diagram illustrates a specific example of detecting the field bus protocols Foundation Fieldbus and Profibus PA. First in 401, a received data frame DF is checked in order to determine if the received data represents a valid data frame; this is performed according to a checksum which is based on a similar principle for both Profibus PA and Foundation Fieldbus. If it is determined that the received data is not a valid data frame, then the detection process is stopped 403. After 401, it has been determined that the received data frame is a valid data frame and the process of detecting the protocol type or format can begin. Characteristics IDPPB of a data frame, being unique for only the Profibus PA protocol, have been pre stored in a database and these characteristics are compared with the received data frame DF in 405. As illustrated in 407, if the data frame DF has the same characteristics as the characteristics IDPPB uniquely identifying Profibus PA, then the received data frame is transmitted according to the Profibus PA protocol, otherwise it transmitted according to the Foundation Fieldbus protocol.

The characteristics could e.g. be a set of detection rules and if these rules are fulfilled then a protocol has been uniquely identified. In the following, an example of rules used to identify a Profibus PA protocol is presented.

In order to define characteristics of the rules to be used, it is necessary to look at the data frames used in both Profibus PA and Foundation Fieldbus.

The Profibus PA data frame format specified in the Profibus DLL specification is valid when the physical media is RS-485. For MBP (Manchester Bus Powered) media Preambles, SD, FCS, and ED, octets are added in the Segment coupler. The original FCS and ED are removed, since they are no longer needed. The original SD is not removed, since it has an informative function regarding the length of the frame. The four valid SD's are:
- SD1 (10H) Frames of fixed length, with no data field, an SD1 is always followed by 3 octets: DA = Destination Address, SA = Source Address, FC = Function Control.
- SD2 (68H) Frames with variable data field length, an SD2 is always followed by: LE, LEr, SD2, DA, SA, FC and some data units, where:
   LE = Octet Length, allowed values: 4 to 249
   LEr= Octet Length, repeated
- SD3 (A2H) Frames of fixed length, with data field, an SD3 is always followed by: DA, SA, FC and 8 data units (octets).
- SD4 (DCH) Token frame, an SD4 is always followed by 2 octets: DA, SA.

If the frame contains only one octet, it is "E5H", called SC (=Single Character).

The Foundation Fieldbus (FF) data frame format is specified in the Fieldbus DLL specification (which refers to IEC 61158-4), as communication via the MBP media (H1-network). An FF data frame always begins with a Frame Control FC field. The valid FC values are specified in the table with the data link layer message structure in figure 5. The parameters of the table are explained in the following:
L - Indicates the length of the addresses used in the message (0=short, 1 =long).
F - Indicates that the token will not be used anymore. The device is returning the token to LAS.
PP - Specifies the priority of the message (urgent, normal, time available).
- Indicates that the field is not used.
[HL.]N.S - The address bytes. If L is equal to 1 there will be long addresses, whose length is 4 bytes (HLNS), but if L is equal to 0 there will be short addresses, whose length is 2 bytes (NS).
N - Indicates that the address is 1 byte, only with the node information (node address).
N.0 - Indicates the short address where the first byte contains the node (node address) and the second byte is equal to zero.
[PDA] - The source address. In case the message does not have the destination address. This type of addressing is normally used in the information report message.
[PSA] - The destination address.
o- - This indicates that the field is optional.
xx-p - Indicates the parameter class of the DLL (e.g. Time Distribution, Probe Node, etc.).
DLSDU - Parameters of the DL Service Data Unit.
SPDU - Parameters of the Support protocol Data Unit. These are the parameters from the other levels of the protocol (FMS, SM and FAS).

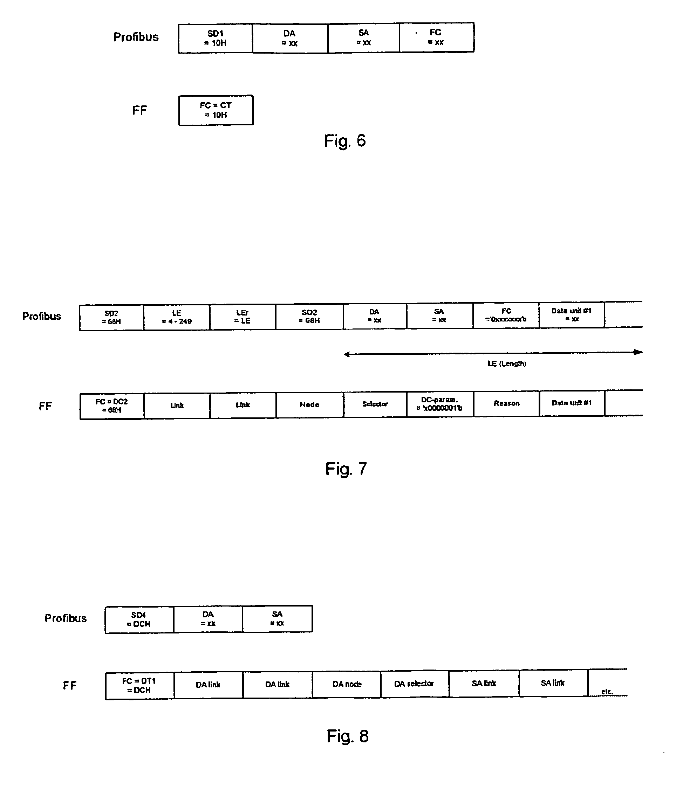

It is of interest to compare the first field of each protocol data frame to see if one protocol could be uniquely identified by only looking at this first field. By comparing the data frames of Profibus and Foundation Fieldbus, it is clear that the FF-Frame Control field conflicts with the Profibus SD field under the following conditions:
- SD1 (10H) / CT - If the FC is a CT with no returning of the token, the octet value is 10H. The conflict can be solved by also checking the frame length, since the length of a CT is always only one octet, see figure 7.
- SD2 (68H) / DC2, if the FC is a DC2 with long addresses and no token returning, the value is 68H. This conflict cannot be solved with 100% certainty, but the risk of misinterpretation can be minimized by checking as many known values as possible:
   o The two LE octets must have the same value (in the range 4-249), and the Node octet 68H. The length of the frame must also match the LE value.

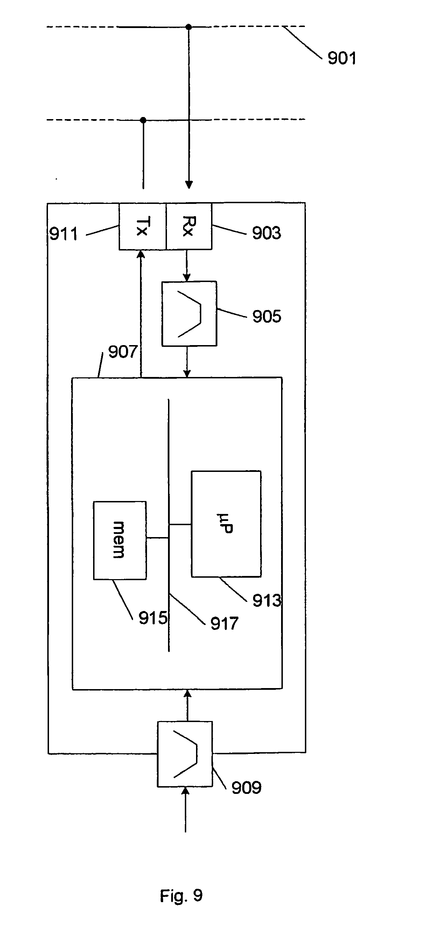

   In theory, an FF frame will match this format in one out of 16 million DC2 frame combinations, see figure 8.
- SD4 (DCH) / DT1, if the FC is a DT1 with a long address, token returning and PP=00 (Priority), the value is DCH. The conflict can be solved by checking the frame length, since the FF DT1 with a long address always contains more than the 3 octets in the Profibus SD4 frame, see figure 9.

According to the above observations the following detection rules can be used to identify uniquely the Profibus PA protocol format being the more recognizable of the two.

It can be detected by means of 5 rules. These 5 rules should then represent all possible Profibus PA frames, and accept none of the possible FF frames. Since this is not 100% possible (because of the SD2 / DC2), the test must be repeated on more than one data frame, and the majority of results will then determine the protocol type. This should provide a 100% sure result, since the FF-DC2 frame is not a type of frame meant to be repeated by the Publisher.
Rule #1

| Octet position | Octet data | Comments |
|---|---|---|
| 1 | 10H | SD1 |
| 2 | XX | Destination address |
| 3 | XX | Source address |
| 4 | XX | FC (Frame Control) |
| Number of octets | 4 | Always the 4 octets above |

Rule #2

| Octet position | Octet data | Comments |
|---|---|---|
| 1 | 68H | SD2 |
| 2 | 4 - 249D | LE (length of frame) |
| 3 | Same data as pos. 2 | LEr (length of frame, repeated) |
| 4 | 68H | SD2 repeated |
| Number of octets | LE +4 | |

Rule #3

| Octet position | Octet data | Comments |
|---|---|---|
| 1 | A2H | SD3 |
| 2 | XX | Destination address |
| 3 | XX | Source address |
| 4 | XX | FC (Frame Control) |
| Number of octets | 12 | Always 4 octets above + 8 data_units |

Rule #4

| Octet position | Octet data | Comments |
|---|---|---|
| 1 | DCH | SD4 |
| 2 | XX | Destination address |
| 3 | XX | Source address |
| Number of octets | 3 | Always the 3 octets above |

Rule #5

| Octet position | Octet data | Comments |
|---|---|---|
| 1 | E5H | SC (Single Character) |
| Number of octets | 1 | Only the 1 octet above |

By checking the first octet of the received frame, it is possible to determine which one (if any) of the 5 rules it is relevant to check. If none of the rules are totally respected, the frame is defined as an FF data frame.

In figure 9, an embodiment of a field bus adapter is illustrated showing the different elements in a field bus adapter. The field bus adapter is connected to the field bus network 901 via a receiver 903 and a transmitter 911. The receiver could then be connected to an analog filtering unit 905 for filtering and restoring the received data package. The received data is then ready to be processed according to the algorithm illustrated in figure 2, where a microcomputer 907 could perform the steps of detecting the protocol according to 203 and 205 shown in figure 2. The microcomputer could comprise a microprocessor 913 and some memory 915 communicating via a communication bus 917. The field bus adapter could also be adapted for receiving data from different types of transducers for measuring physical values such as temperature, speed, and/or distance, and the received data is then the measured physical value. In an embodiment the transducer is connected to the microcomputer 907 in the field bus adapter via an analog filtering unit for filtering and restoring the data received from the transducer.

## Claims

1. A field bus adapter (101) for transmitting and receiving control data from a field bus network (103, 901) where data is being exchanged according to a specific field bus protocol, said adapter comprises a transmitter (911) for transmitting data to the field bus network and a receiver (909) for receiving data from the field bus network, **characterised in that** the adapter further comprises a protocol detector adapted for detecting a field bus protocol between a number of predefined field bus protocols and for setting up the receiver and the transmitter for communicating according to said detected field bus protocol, said protocol detector comprising
- means for receiving data from the field bus,
- means for determining if the received data complies with predefined characteristics stored in a database, said characteristics uniquely identifying data of only one of said number of predefined field bus protocols,
- means for setting up the receiver and the transmitter for communicating according to said one protocol, if said received data complies with said characteristics.

2. A field bus adapter according to claim 1, wherein the protocol detector is adapted for detecting two predefined field bus protocols being a first and a second predefined field bus protocol, the protocol detector comprising
- means for receiving data from the field bus,
- means for determining if the received data complies with predefined characteristics stored in a database, said characteristics uniquely identifying data of said first field bus protocol,
- means for setting up the receiver and the transmitter for communicating according to said first predefined protocol, if the received data complies with said characteristics,
- means for setting up the receiver and the transmitter for communicating according to said second predefined protocol, if said received data does not comply with said characteristics.

3. A field bus adapter according to claim 1-2, wherein said data are received in data frames comprising a number of fields, and wherein said characteristics uniquely identify data frames of one of said number of predefined field bus protocols.

4. A field bus adapter according to claim 3, wherein said characteristics uniquely identifying a data frame comprise characteristics of the content of specific fields in the data frame.

5. A field bus adapter according to claim 3-4, wherein said characteristics uniquely identifying a data frame comprise characteristics of the length of a data frame.

6. A field bus adapter according to claim 3-5, wherein the predefined protocol is detected, based on more than one data frame.

7. A field bus adapter according to claim 2-5, wherein the first field bus protocol is Profibus and the second field bus protocol is Foundation Fieldbus.

8. A field bus adapter according to claim 7, wherein the characteristics uniquely identifying a Foundation Fieldbus comprise characteristics of the content of the first field in the data frame and of the length of the data frame.

9. A field bus adapter according to claim 1-8, wherein the control data to be transmitted is a value representing a measured physical value.

10. A field bus adapter according to claim 1-9, wherein said adapter comprises means for measuring said physical value.

11. A method of transmitting and receiving by a field bus adapter (101) control data from a field bus network (103, 901) where data is being exchanged according to a specific field bus protocol, said adapter comprising a transmitter (911) for transmitting data to the field bus network and a receiver (903) for receiving data from the field bus network, **characterised in that** the adapter further comprises a protocol detector adapted for detecting a field bus protocol between a number of predefined field bus protocols and for setting up the receiver and the transmitter for communicating according to said detected field bus protocol, said method comprising:
- receiving data from the field bus,
- determining if the received data complies with predefined characteristics stored in a database, said characteristics uniquely identifying data of only one of said number of predefined field bus protocols,
- setting up the receiver and transmitter for communicating according to said one protocol, if said received data complies with said characteristics.

12. A method according to claim 11 for detecting two predefined field bus protocols being a first and a second predefined field bus protocol, comprising
- receiving data from the field bus,
- determining if the received data complies with predefined characteristics stored in a database, said characteristics uniquely identifying data of said first field bus protocol,
- setting up the receiver and transmitter for communicating according to said first predefined protocol, if the received data complies with said characteristics,
- setting up the receiver and transmitter for communicating according to said second predefined protocol, if said received data does not comply with said characteristics.

13. A method according to claim 11-12, wherein the step of detecting the field bus protocol and setting up the receiver and the transmitter for communicating according to the detected field bus protocol is only performed in an initialisation phase before transmitting and receiving control data via said field bus network.

14. A method according to claim 11-12, wherein the step of detecting the field bus protocol is performed periodically in predefined intervals.

15. A storage medium having stored thereon a computer program comprising instructions for performing the method of claims 11-14 when run on a computer.

## Patentansprüche

1. Adapter (101) für einen Feldbus zum Übertragen und Empfangen von Steuerdaten aus einem Feldbusnetzwerk (103, 901), in welchem die Daten entsprechend einem spezifischen Feldbusprotokoll ausgetauscht werden, wobei der Adapter einen Sender (911) zum Übertragen von Daten zu dem Feldbusnetzwerk und einen Empfänger (903) zum Empfangen von Daten aus dem Feldbusnetzwerk aufweist,
**dadurch gekennzeichnet,**
**dass** der Adapter außerdem ein Erkennungsmittel für das Protokoll aufweist, welches zum Erkennen eines Feldbusprotokolls zwischen einer Anzahl von vordefinierten Feldbusprotokollen und für ein Konfigurieren des Empfängers und des Senders zum Kommunizieren entsprechend dem erkannten Feldbusprotokoll aufgebaut ist, wobei das Erkennungsmittel für das Protokoll aufweist:
- eine Einrichtung zum Empfangen von Daten von dem Feldbus,
- eine Einrichtung zum Feststellen, ob die empfangenen Daten in einer Datenbank gespeicherte vordefinierte Eigenschaften erfüllen, wobei diese Eigenschaften Daten lediglich eines einzigen aus der Anzahl der vordefinierten Feldbusprotokolle eindeutig identifizieren,
eine Einrichtung für das Konfigurieren des Empfängers und des Senders zum Kommunizieren entsprechend dem besagten einen Protokoll, falls die empfangenen Daten die Eigenschaften erfüllen.

2. Adapter nach Anspruch 1 für einen Feldbus, in welchem das Erkennungsmittel für das Protokoll für das Erkennen von zwei vordefinierten Feldbusprotokollen aufgebaut ist, die ein erstes und ein zweites vordefiniertes Feldbusprotokoll sind, wobei das Erkennungsmittel für das Protokoll aufweist:
- eine Einrichtung zum Empfangen von Daten von dem Feldbus,
- eine Einrichtung zum Festhalten, ob die empfangenen Daten die in einer Datenbank gespeicherten vordefinierten Eigenschaften erfüllen, wobei die Eigenschaften eindeutig Daten aus dem ersten Feldbusprotokoll identifizieren,
- eine Einrichtung zum Konfigurieren des Empfängers und des Senders zum Kommunizieren entsprechend dem ersten vordefinierten Protokoll, falls die empfangenen Daten die besagten Eigenschaften erfüllen,
- eine Einrichtung zum Konfigurieren des Empfängers und des Senders zum Kommunizieren entsprechend dem zweiten vordefinierten Protokoll, falls die empfangenen Daten die Eigenschaften nicht erfüllen.

3. Adapter entsprechend Anspruch 1 oder 2 für einen Feldbus, in welchem die Daten in Datenübertragungsblöcken empfangen werden, welche eine Anzahl von Feldern aufweisen, und in welchem die Eigenschaften eindeutig Datenübertragungsblöcke von einem aus der Anzahl der vordefinierten Feldbusprotokolle identifizieren.

4. Adapter nach Anspruch 3 für einen Feldbus, in welchem die Eigenschaften, die eindeutig einen Datenübertragungsblock identifizieren, Eigenschaften des Inhalts von spezifischen Feldern in dem Datenübertragungsblock aufweisen.

5. Adapter nach Anspruch 3 oder 4 für einen Feldbus, in welchem die Eigenschaften, die eindeutig einen Datenübertragungsblock identifizieren, Eigenschaften der Länge eines Datenübertragungsblocks aufweisen.

6. Adapter nach einem der Ansprüche 3 bis 5 für einen Feldbus, in welchem das vordefinierte Protokoll gestützt auf mehr als einen Datenübertragungsblock erkannt wird.

7. Adapter nach einem der Ansprüche 2 bis 5 für einen Feldbus, in welchem das erste Feldbusprotokoll ein Profibus und das zweite Feldbusprotokoll ein Foundation Fieldbus ist.

8. Adapter nach Anspruch 7 für einen Feldbus, in welchem die Eigenschaften, die eindeutig einen Foundation Fieldbus identifizieren, Eigenschaften des Inhalts des ersten Feldes in dem Datenübertragungsblock und der Länge des Datenübertragungsblocks aufweisen.

9. Adapter nach einem der Ansprüche 1 bis 8 für einen Feldbus, in welchem die zu übertragenden Steuerdaten einen Wert darstellen, der einen gemessenen physikalischen Wert repräsentiert.

10. Adapter nach Anspruch 1 bis 9 für einen Feldbus, in welchem der Adapter eine Einrichtung zum Messen des physikalischen Wertes aufweist.

11. Verfahren zum Übertragen und Empfangen von Steuerdaten durch einen Adapter (101) für einen Feldbus von einem Feldbusnetzwerk (103, 901), wobei Daten gemäß einem spezifischen Feldbusprotokoll ausgetauscht werden, wobei der Adapter einen Sender (911) zum Übertragen der Daten an das Feldbusnetzwerk und einen Empfänger (911) zum Empfangen von Daten aus dem Feldbusnetzwerk aufweist,
**dadurch gekennzeichnet,**
**dass** der Adapter außerdem ein Erkennungsmittel für ein Protokoll aufweist, welches zum Erkennen eines Feldbusprotokolls zwischen einer Anzahl von vordefinierten Feldbusprotokollen und für das Konfigurieren des Empfängers und des Senders, zum Kommunizieren entsprechend dem erkannten Feldbusprotokoll aufgebaut ist, wobei das Verfahren aufweist:
- das Empfangen von Daten von dem Feldbus,
- das Feststellen, ob die empfangenen Daten in einer Datenbank gespeicherte vordefinierte Eigenschaften erfüllen, wobei diese Eigenschaften Daten lediglich eines einzigen aus der Anzahl von vordefinierten Feldbusprotokollen eindeutig identifizieren,
- das Konfigurieren des Empfängers und des Senders zum Kommunizieren entsprechend dem besagten einen Protokoll, falls die empfangenen Daten die Eigenschaften erfüllen.

12. Verfahren nach Anspruch 11 zum Erkennen von zwei vordefinierten Feldbusprotokollen, die ein erstes und ein zweites vordefiniertes Feldbusprotokoll sind, aufweisend:
- das Empfangen von Daten von dem Feldbus,
- das Feststellen, ob die empfangenen Daten in einer Datenbank gespeicherte vordefinierte Eigenschaften erfüllen, wobei die Eigenschaften eindeutig Daten aus dem ersten Feldbusprotokoll identifizieren,
- das Konfigurieren des Empfängers und des Senders zum Kommunizieren entsprechend dem ersten vordefinierten Protokoll, falls die empfangenen Daten die besagten Eigenschaften erfüllen,
- das Konfigurieren des Empfängers und des Senders zum Kommunizieren entsprechend dem zweiten vordefinierten Protokoll, falls die empfangen Daten die besagten Eigenschaften nicht erfüllen.

13. Verfahren nach Anspruch 11 oder 12, in welchem der Schritt des Erkennens des Feldbusprotokolls und des Konfigurierens des Empfängers und des Senders zum Kommunizieren entsprechend zu dem erkannten Feldbusprotokoll nur in einer Initialisierungsphase vor dem Senden und Empfangen von Steuerdaten über das Feldbusnetzwerk durchgeführt wird.

14. Verfahren nach Anspruch 11 oder 12, in welchem der Schritt des Erkennens des Feldbusprotokolls periodisch in vordefinierten Intervallen durchgeführt wird.

15. Speichermedium mit einem auf diesem gespeicherten Computerprogramm, welches Befehle zum Durchführen des Verfahrens nach den Ansprüchen 11 bis 14 aufweist, wenn es auf einem Computer läuft.

## Revendications

1. Adaptateur de bus de terrain (101) pour émettre et recevoir des données de commande à partir d'un réseau de type bus de terrain (103,901) où des données sont en train d'être échangées selon un protocole de bus de terrain spécifique, ledit adaptateur comprend un émetteur (911) pour transmettre des données au réseau de type bus de terrain et un récepteur (903) pour recevoir des données provenant du réseau de type bus de terrain, **caractérisé en ce que** l'adaptateur comprend de plus un détecteur de protocole conçu pour détecter un protocole de bus de terrain entre un certain nombre de protocoles de bus de terrain prédéfinis et pour configurer le récepteur et l'émetteur pour communiquer selon ledit protocole de bus de terrain détecté, ledit détecteur de protocole comprenant :
- des moyens pour recevoir des données provenant du bus de terrain,
- des moyens pour déterminer si les données reçues se conforment aux caractéristiques prédéfinies stockées dans une base de données, lesdites caractéristiques identifiant uniquement des données de seulement l'un dudit nombre de protocoles de bus de terrain prédéfinis,
- des moyens pour configurer le récepteur et l'émetteur pour communiquer selon ledit protocole, si lesdites données reçues se conforment auxdites caractéristiques.

2. Adaptateur de bus de terrain selon la revendication 1, dans lequel le détecteur de protocole est conçu pour détecter deux protocoles de bus de terrain prédéfinis qui sont un premier et un second protocoles de bus de terrain prédéfinis, le détecteur de protocole comprenant :
- des moyens pour recevoir des données provenant du bus de terrain,
- des moyens pour déterminer si les données reçues se conforment aux caractéristiques prédéfinies stockées dans une base de données, lesdites caractéristiques identifiant uniquement des données dudit premier protocole de bus de terrain,
- des moyens pour configurer le récepteur et l'émetteur pour communiquer selon ledit premier protocole prédéfini, si les données reçues se conforment auxdites caractéristiques,
- des moyens pour configurer le récepteur et l'émetteur pour communiquer selon ledit second protocole prédéfini, si lesdites données reçues ne se conforment pas auxdites caractéristiques.

3. Adaptateur de bus de terrain selon la revendication 1-2, dans lequel lesdites données sont reçues dans des blocs de données comprenant un certain nombre de champs, et dans lequel lesdites caractéristiques identifient uniquement des blocs de données de l'un dudit nombre de protocoles de bus de terrain prédéfinis.

4. Adaptateur de bus de terrain selon la revendication 3, dans lequel lesdites caractéristiques identifiant uniquement un bloc de données comprennent des caractéristiques du contenu de champs spécifiques dans le bloc de données.

5. Adaptateur de bus de terrain selon la revendication 3-4, dans lequel lesdites caractéristiques identifiant uniquement un bloc de données comprennent des caractéristiques de la longueur d'un bloc de données.

6. Adaptateur de bus de terrain selon la revendication 3-5, dans lequel le protocole prédéfini est détecté, en se basant sur plus d'un bloc de données.

7. Adaptateur de bus de terrain selon la revendication 2-5, dans lequel le premier protocole de bus de terrain est Profibus et le second protocole de bus de terrain est Foundation Fieldbus.

8. Adaptateur de bus de terrain selon la revendication 7, dans lequel les caractéristiques identifiant uniquement un Foundation Fieldbus comprennent des caractéristiques du contenu du premier champs dans le bloc de données et de la longueur du bloc de données.

9. Adaptateur de bus de terrain selon la revendication 1-8, dans lequel les données de commande à transmettre sont une valeur représentant une valeur physique mesurée.

10. Adaptateur de bus de terrain selon la revendication 1-9, dans lequel ledit adaptateur comprend des moyens pour mesurer ladite valeur physique.

11. Procédé pour émettre et recevoir par un adaptateur de bus de terrain (101), des données de commande à partir d'un réseau de type bus de terrain (103,901) où des données sont en train d'être échangées selon un protocole de bus de terrain spécifique, ledit adaptateur comprenant un émetteur (911) pour transmettre des données au réseau de type bus de terrain et un récepteur (903) pour recevoir des données provenant du réseau de type bus de terrain, **caractérisé en ce que** l'adaptateur comprend de plus un détecteur de protocole conçu pour détecter un protocole de bus de terrain entre un certain nombre de protocoles de bus de terrain et pour configurer le récepteur et l'émetteur pour communiquer selon ledit protocole de bus de terrain détecté, ledit procédé consistant à :
- recevoir des données provenant du bus de terrain,
- déterminer si les données reçues se conforment aux caractéristiques prédéfinies stockées dans une base de données, lesdites caractéristiques identifiant uniquement des données de seulement l'un dudit nombre de protocoles de bus de terrain prédéfinis,
- configurer le récepteur et l'émetteur pour communiquer selon ledit protocole, si lesdites données reçues se conforment auxdites caractéristiques.

12. Procédé selon la revendication 11 pour détecter deux protocoles de bus de terrain prédéfinis qui sont un premier et un second protocoles de bus de terrain prédéfinis, consistant à :
- recevoir des données provenant du bus de terrain,
- déterminer si les données reçues se conforment aux caractéristiques prédéfinies stockées dans une base de données, lesdites caractéristiques identifiant uniquement des données dudit premier protocole de bus de terrain,
- configurer le récepteur et l'émetteur pour communiquer selon ledit premier protocole prédéfini, si les données reçues se conforment auxdites caractéristiques,
- configurer le récepteur et l'émetteur pour communiquer selon ledit second protocole prédéfini, si lesdites données reçues ne se conforment pas auxdites caractéristiques.

13. Procédé selon la revendication 11-12, dans lequel l'étape de détecter le protocole de bus de terrain et de configurer le récepteur et l'émetteur pour communiquer selon le protocole de bus de terrain détecté, est seulement mise en oeuvre dans une phase d'initialisation avant l'émission et la réception des données de commande via ledit réseau de type bus de terrain.

14. Procédé selon la revendication 11-12, dans lequel l'étape de détecter le protocole de bus de terrain est réalisée périodiquement à intervalles prédéfinis.

15. Support de stockage ayant, stocké sur celui-ci, un programme informatique comprenant des instructions pour réaliser le procédé des revendications 1-14 quand il s'exécute sur un ordinateur.
